# EUROPEAN PATENT APPLICATION

(11) **EP 2 810 816 A2**
(43) Date of publication of application: **10.12.2014**
(21) Application number: 14161053.5
(22) Date of filing: 21.03.2014
(51) Int. Cl.: B60L 11/18

(54) **System and method for charging electric vehicles**

(30) Priority: 20.05.2013 ES 201330719
(71) Applicant: Marmolejo Gonzalez, Mario Juan, 28220 Majadahonda (Madrid) (ES); Quiros Andrino, Juan Jose, 28863 Cobena (Madrid) (ES)
(72) Inventor: Marmolejo Gonzalez, Mario Juan, 28220 Majadahonda (Madrid) (ES); Quiros Andrino, Juan Jose, 28863 Cobena (Madrid) (ES)
(74) Representative: Ungria López, Javier

(57) **Abstract**

System and associated method for charging electric vehicles, which comprises at least one electric vehicle charging unit (200); one electric energy meter hub (12), installed in a building's electricity meter room (10); at least one prefabricated electrical conduit (14), which conducts the electric current from the meter hub (12), to which it is connected by means of an electrical service line (13), over to the charging units (200); a system control switchboard (11) that manages the electric vehicle charging system (1); wherein each charging unit (200) comprises an electrical connector (19) and a multicore cable, to connect to the electrical conductors of the prefabricated electrical conduit (14), through several openings (15) present in said prefabricated electrical conduits (14).

## Description

### Object of the invention

The present invention relates to a system for charging electric vehicles, which is associated with a corresponding method for managing said charging, is the system being installed in garages or parking areas of residential or office buildings.

It is applicable in the industry dedicated to manufacturing electrical materials and components, this same field taken to include the sector devoted to electrical wiring systems and to electricity in general, as well as in the electric battery industry and in the automotive industry, more specifically the electric automobile industry, both pure and hybrid.

### Technical problem to be solved and background to the invention

To date, electric vehicle technology, both pure and hybrid, has developed tremendously, and today a great number of these electric vehicles drive along our roadways, due both to a decrease in production costs, which has made it possible to sell them at competitive prices, as well as to their high energy efficiency, which makes up for these vehicles' high price with significant savings on fuel.

There is a wide variety of systems for charging electric vehicle batteries, involving charging points or stations, although many of said charging systems require an infrastructure which, due to either its complexity or its high cost, makes it so that said systems are currently unavailable to the public at the majority of conventional service stations, and, of course, in almost no buildings or parking areas, be they public or private.

The service stations often referred to as "charging stations" offer electric vehicle battery charging services by connecting the vehicles to "pumps", or to be more precise, charging points. In the parking areas of some buildings, there are also some electric vehicle charging points or stations. In both cases, said charging points or stations are installed using a specific built-in electrical infrastructure with a predetermined number of charging points, such that it is not possible to install them simply and without the need for further construction after the building has been built, and the number of charging stations is predetermined at the outset of the project.

The system for charging electric vehicles which is the object of the present invention makes use of conventional prefabricated electrical conduits, which are commercially available for other applications, to install an additional electrical circuit inside a building, said circuit being intended for carrying the electric energy necessary in order to charge said vehicles.

It is a system that is modular in nature, and easily expandable, which makes use of charging units that are electrically connected to the aforementioned conduits, through openings that are conventionally found in said conduits.

As such, it is each resident or parking space user who decides whether or not to acquire one of the aforementioned charging units, so that it is not necessary for a building's property owners' association to build in any additional electrical infrastructure external to the building to provide service to the electric vehicle charging system that is the object of the present invention.

In addition, in new buildings, pre-installation of the present electric vehicle charging system can be taken into consideration starting from the project stage, which would entail a minimal cost increase with high added value for the building.

The present electric vehicle charging system is, then, not based on a fixed, predetermined number of charging stations. Such a system would entail having to wait in long lines to charge an electric vehicle at a charging station being used by another user. The versatility of the present electric vehicle charging system makes it possible for each user to be the one who installs his or her own charging unit along an electrical conduit, so that an undetermined number of electric vehicles may simultaneously be charged in parallel, the only limitation being the electrical power available over the building's local electrical grid.

Moreover, it is common in residential or office buildings for there to be a power surplus available during certain hours of the day, which coincide with the so-called "troughs" corresponding to the price of the lowest electricity tariff; users of said building do not make use of this power. The electric vehicle charging system that is the object of the present invention makes use of said power surplus to charge the batteries of the electric vehicles connected to the charging system, thus contributing to the utilization of the infrastructures of the distribution grid, and to the country's energy savings and environmental improvement.

The electric vehicle charging system that is the object of the present invention charges electric vehicles according to an innovative method, which takes into account efficiency criteria based on available power and the electricity tariff offered during each time period by the electricity company.

As such, the present invention contributes three significant novelties to the current state of the art of electric vehicle charging systems:
1) a charging system structure that is very simple, making it so that it does not require an additional electrical installation in the building where it is set up, using only the conventional electrical wiring system of the building;
2) high versatility, since individual users are the ones who acquire and install their charging unit in their own parking space, making for a system that allows for a plurality of electric vehicles to be simultaneously charged in parallel, thus avoiding the conventional limitation of a predetermined number of charging stations, the only limitation being the electrical power available in the building where the charging system is installed;
3) an efficient method for managing electric vehicle charging in parking areas, which takes into account the power available over the local electricity grid of the building, and the electricity supply available at any given time.

### Description of the invention

The present invention relates to a system for charging electric vehicles, which is associated with a method for managing said charging.

The electric vehicle charging system comprises:
- at least one electric vehicle charging unit;
- an electric energy meter hub;
- at least one prefabricated electrical conduit, which conducts the electric current from the meter hub, to which it is connected by means of an electrical service line, over to the charging units;
- a system control switchboard that manages the electric vehicle charging system;
- electric current gauges located at different points along the electrical wiring of the charging system;
wherein the charging system is set up by means of:
- installing the meter hub in the electricity meter room of a building, as an additional electricity meter;
- installing the aforementioned prefabricated electrical conduits in the parking area or garage of a building, preferably a residential or office building;
- installing the system control switchboard by connecting it to the electrical service line that electrically connects the meter hub to each prefabricated electrical conduit;
- connecting each charging unit to a prefabricated electrical conduit, by means of a multicore cable and a connector, to the electrical conductors of the prefabricated electrical conduit, through several openings present in said prefabricated electrical conduits;
thus making it possible to install a plurality of charging units in parallel, and to simultaneously charge a plurality of electric vehicles.

The prefabricated electrical conduit comprises:
- three phase conductors, one neutral conductor, and one ground conductor, for three-phase and single-phase electrical connections;
- several regularly-spaced openings for electrically connecting different types of electrical devices.

There are two electric current gauges located one at the beginning of the general electrical service line distributing power to the building, and one on the electrical service line that connects the meter hub to the prefabricated electrical conduits; in turn, said electric current gauges are electrically connected to the system control switchboard, in such a way that they send to the latter the measurements taken, so that said system control switchboard can calculate:
- the power available in the building for the charging system, by calculating the difference between the power supply and the power consumed by the households or offices in the building;
- the differential between the instant power consumed by the charging system, and the maximum power available for the charging system, in order to avoid ever exceeding the maximum available power.

Each electric current gauge comprises a set of current transformers, to measure the intensity of the current in the electrical phases of a section of electrical wiring.

The charging unit comprises:
- a three-phase or single-phase power circuit;
- a control and communications unit to communicate with the system control switchboard;
- a three-phase or single-phase electric energy meter;
- a three-phase or single-phase master switch, which comprises:
   ○ a power control switch;
   ○ a residual current device;
- a communications interface built with a choice of:
   ○ a keypad;
   ○ a touch screen;
   ○ a combination of screen and keypad;
- a three-phase or single-phase electrical outlet.

To use the present electric vehicle charging system, one must enter a password through the communications interface of the charging unit.

The master switch is motorized, and is controlled by the system control switchboard; the power control switch and the associated residual current device are reset together, when the system control switchboard gives the control and communications unit of the charging unit the order to reset.

There are two different communications channels or pathways: on the one hand, communications between the system control switchboard and the control and communications unit of the charging unit, and on the other, communications between each three-phase or single-phase energy meter of each charging unit, and the meter hub.

Both types of communications are made by means of a telecommunications technology chosen between:
○ PLC technology (*Power Line Communications*, an acronym which refers to control and communications systems that use the electric energy transmission lines of a particular wiring system for transmitting high-frequency signals that carry instructions for controlling and commanding particular devices), which uses as its communications channel the power circuit of the charging unit and the electrical conductors of the prefabricated electrical conduit and of the electrical service line that connects the meter hub to each prefabricated electrical conduit;
○ signals transmitted over a specific communications circuit within the present electric vehicle charging system;
○ wireless technology;
○ a combination of the above.

In one embodiment of the charging units, the energy meter of said charging units incorporates a modem, typically of the GPRS sort, for direct communication with the electricity company.

The electricity meter hub is configured to record the energy and instant power consumed, both in each charging unit, and in the entire electric vehicle charging system.

The electricity meter hub, in communication with the system control switchboard, communicates all the data measured by said meter hub to the electricity company, along with the data sent to it by the energy meters of each charging unit.

The control and communications unit of each charging unit sends the system control switchboard data concerning:
- the moment an electric vehicle is connected to the electric vehicle charging system;
- the connection status of the master switch;
and receives orders to connect and disconnect the master switch, sent by the system control switchboard.

The electric energy meter of each charging unit measures the energy and instant power consumed by each charging unit, subsequently sending this data to the electricity meter hub of the charging system.

The energy consumed at each charging unit serves as the billing data corresponding to the charging unit in question. The system control switchboard, in turn, receives, from the meter hub, the data concerning the instant power consumed at each charging unit, in order to calculate the power available in the building.

The charging unit comprises a locking device, which when activated has an effect chosen between:
a. mechanically locking or unlocking the electrical outlet, thus respectively preventing or allowing the plug of the cable connecting to the electric vehicle to be connected/disconnected;
b. electrically connecting/disconnecting said electrical outlet to/from the power circuit of the charging unit.
c. a combination of the above two effects.

The electrical outlet of the charging unit comprises a detection device that detects when the plug of the cable connecting to an electrical vehicle is connected, and sends a signal, via the control and communications unit of the charging unit, to the system control switchboard, informing it of the three-phase or single-phase connection of a vehicle to the charging system.

The charging unit comprises an indicator for signaling the presence or absence of voltage in the electrical outlet.

The charging unit comprises an external push button, which may or may not be integrated into the keypad, that, when pressed by the user of the charging system, indicates that the vehicle needs to be charged urgently.

The user of the electric vehicle charging system acquires either a three-phase or a single-phase charging unit, depending on the type of electrical connection that his or her electric vehicle has.

The system control switchboard detects when an electric vehicle has been connected to a charging unit, and likewise detects whether said charging unit is three-phase or single-phase.

The method for charging electric vehicles according to the electric vehicle charging system that is the object of the present invention, comprises the following steps for charging electric vehicles:
- connecting the plug of the charging cable of the electric vehicle to the corresponding electrical outlet on the charging unit;
- verify if the user of the charging system is authorized to use the charging unit to which his or her vehicle is connected, to which end the user enters a code through a "user - charging unit" communications interface;
- indicate whether or not the electric vehicle needs to be charged urgently, by pressing an external push button, or by entering a specific code through the communications interface of the charging unit;
- verify whether conditions are ideal for charging the electric vehicle, where ideal conditions are understood to be those that meet previously determined efficiency criteria;
- charge the electric vehicle.

The efficiency criteria used to determine whether conditions are ideal for charging the electric vehicle comprise:
- determining that there is power available for the charging system, due to the presence of surplus power in the building where the charging system is installed;
- determining that the user of the charging system has priority to charge his or her vehicle, according to a waiting list that is formulated based on the order in which each electric vehicle connects to the charging system;
- establishing a schedule for charging the electric vehicles, according to which the ideal moment to begin to charging the vehicle is determined as the moment when the lowest electricity tariff offered by the electricity company is available, during a set time period starting as soon as the electric vehicle connects to the electric vehicle charging system.

The step in the method in which it is verified whether conditions are ideal for charging, according to the aforementioned efficiency criteria, is carried out following a process that in turn comprises the following stages:
- verifying whether it has been indicated that the electric vehicle needs to be charged urgently, by pressing the external push button, or by entering a specific code through the communications interface;
   - verifying, if the user has not indicated that his or her vehicle needs to be charged urgently, if the lowest electricity tariff offered by the electricity company is available, during a set time period starting as soon as the electric vehicle is connected to the electric vehicle charging system, and continuing with the method when the lowest electricity tariff within the aforementioned time period is available.
- verifying, according to the priority in the waiting list, which is based on the order in which the electric vehicles arrive and are connected to the charging system, whether there is power available, in the system and in the connecting electric phase, to charge the electric vehicle, and continue with the method when there is power available, according to the aforementioned priority;
- charging the electric vehicle.

### Brief description of the drawings

The present invention may be better understood with the aid of the figures listed below:
Figure 1: One-line electrical diagram of an embodiment of the electrical wiring of the charging system.
Figure 2a: Front view of a charging unit with a three-phase electrical outlet.
Figure 2b: Front view of a charging unit with a single-phase electrical outlet.
Figure 2c: Diagram of a charging unit connecting to one of the openings of a prefabricated electrical conduit.
Figure 3: Flow chart with the different steps in the method for charging electric vehicles.
Figure 4: Flow chart with the different stages in the method for verifying whether conditions are ideal for charging the vehicle.

The figures incorporate the following numerical references:
1. Charging system.
2. Method.
10. Meter room.
11. System control switchboard.
12. Electric energy meter hub.
13. Electrical service line for distributing to the conduits.
14. Prefabricated electrical conduit.
15. Opening.
16. Current gauge.
17. General service line for distributing power to the building.
18. Electricity meters.
19. Connector.
100. Parking area.
200. Charging unit.
201. Interface.
202. Keypad.
203. Electrical outlet.
204. Master switch.
205. Control and communications unit.
206. Locking device.
207. External push button.
208. Screen.
209. Power circuit.
210. Electric energy meter.
211. Modem.
212. Indicator.
213. Detection device.
Steps in the method for charging electric vehicles:
D. 101: Connect the plug of the charging cable.
D. 102: User identification.
D. 103: Indicate urgency.
D. 104: Verify ideal conditions.
D. 105: Charge the vehicle.
Stages in the method for verifying ideal conditions:
D. 201: Verify urgent charging.
D. 202: Wait for lowest tariff.
D. 203: Verify lowest tariff.
D. 204: Wait for turn.
D. 205: Verify priority and available power.

### Detailed description

The present invention relates to a system (1) for charging both pure and hybrid electric vehicles, and to the method (2) that manages said charging. The electric vehicle charging system (1) is installed in parking areas (100) of residential or office buildings.

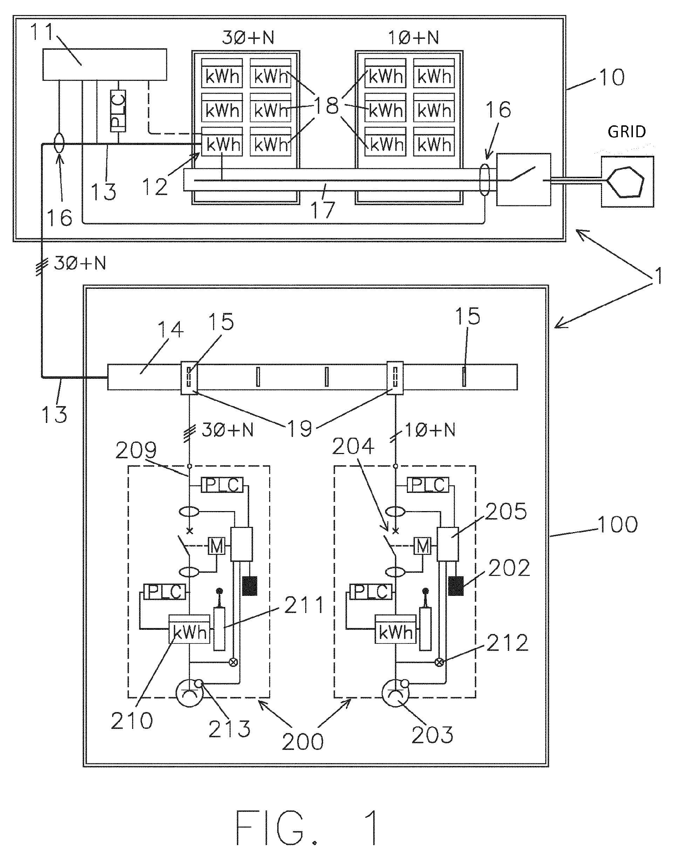

Figure 1 is a schematic representation of the electric vehicle charging system (1) that is the object of the present invention. Said electric vehicle charging system (1) comprises the following elements:
- an electric energy meter hub (12);
- at least one prefabricated electrical conduit (14);
- at least one electric vehicle charging unit (200); with a multicore cable and connector (19);
- at least one system control switchboard (11), which manages the electric vehicle charging system (1);
- two sets of current transformers, for electric current gauge (16).

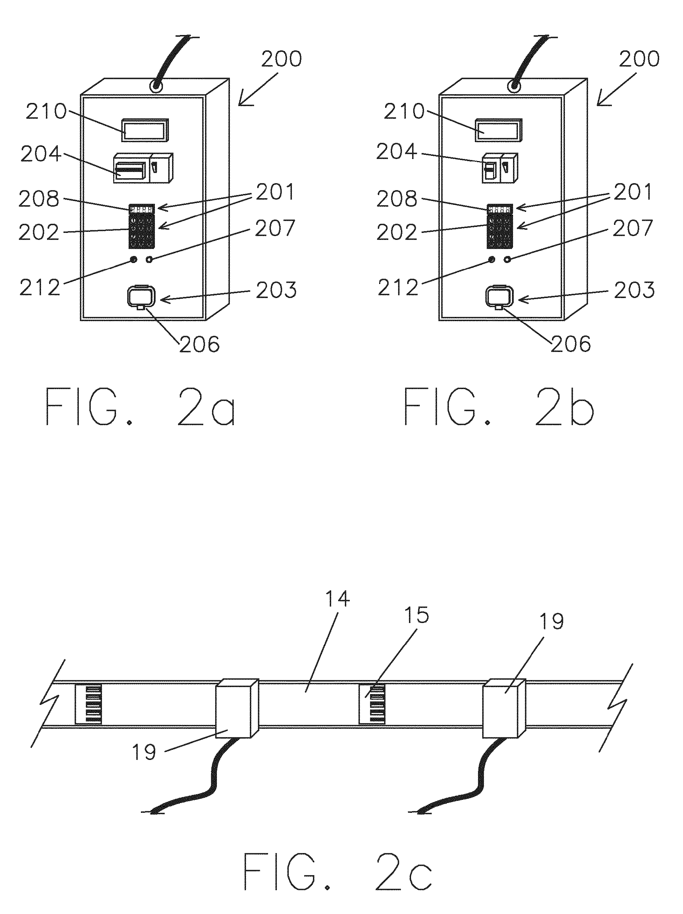

Figure 2a shows a front view of an embodiment of a charging unit (200), with a three-phase electrical outlet (203), and corresponding multicore cable for establishing a three-phase electrical connection between the charging unit (200) and the prefabricated electrical conduit (14).

Figure 2b shows a front view of a second embodiment of a charging unit (200), with a single-phase electrical outlet (203), and corresponding multicore cable for establishing a single-phase electrical connection between the charging unit (200) and the prefabricated electrical conduit (14).

Figure 2c shows a diagram of the charging units (200) connecting by means of their multicore cable and corresponding connector (19) to a prefabricated electrical conduit (14), through an opening (15) in said prefabricated electrical conduit (14).

The meter hub (12) is typically installed, as an additional meter, in the meter room (10) of the building, which houses the electricity meters (18) of the homes or offices. A new individual shunt is made for the electric vehicle charging system (1), which starts at the line distributing power to the building (17) and passes through said meter hub (12).

The unit containing the meter hub (12), depending on the power supply, shall comply with current regulations, in terms of size, shape and composition.

An electrical service line (13) is set up to connect said meter hub (12) to the prefabricated electrical conduits (14) that distribute the electrical power of the charging system (1) to the various charging units (200).

The meter hub (12) is of the digital electronic type, and reads the instant and accumulated electrical power consumed by the charging system (1) and by each individual user of the charging system (1).

The meter hub (12) uses conventional telecommunications technology to communicate with the system control switchboard (11) of the charging system (1), and with the electric energy meters (210) of the charging units (200).

In a preferred embodiment, the communication between the meter hub (12) and the electric energy meters (210) of the charging units (200) is of the PLC type, and uses the electrical wiring of the prefabricated electrical conduit (14) and the electrical service line (13) of the charging system (1) as a communications channel. Moreover, in said preferred embodiment, communications between the meter hub (12) and the control switchboard (11) of the charging system (1) are carried out by transmitting signals over a specific communications circuit.

The prefabricated electrical conduits (14) are three-phase, and include electrical conductors for three phases, neutral and ground. Said prefabricated electrical conduits (14) are typically installed along the walls of the parking area (100), passing by all of the parking spaces within a parking area (100). In a preferred embodiment, said prefabricated electrical conduits (14) are of the conventional commercial type referred to as "Blindobarra", and have openings (15) spaced regularly all along their length, to ensure that one of said openings (15) will be located at each parking space within a parking area (100).

The charging units (200) are installed and electrically connected, by means of wiring and an auxiliary connector (19) at the spots where the aforementioned openings (15) are found, to the electrical conductors of the prefabricated electrical conduit (14).

The geometry of the charging units (200) is box-shaped, and inside comprises the following elements:
- a power circuit (209);
- a control and communications unit (205);
- an electric energy meter (210);
- a master switch (204).

Power circuit (209) (as opposed to what is commonly known as a control circuit), is taken to mean the conventional circuit in all types of electrical wiring systems that is in charge of letting the electric current flow, enabling the various devices connected to the system to be supplied and physically activated.

As has already been mentioned, the charging units (200) comprise an electric energy meter (210), kWh, a master switch (204), which includes a residual current device, and further comprises an electrical outlet (203), a keypad (202), and an indicator (212), which signals the presence/absence of voltage in the electrical outlet (203), an external push button (207), which in one embodiment of the charging unit (200) is integrated into the keypad (202) itself, to select "urgent" charging.

In one possible embodiment of the present invention, the charging units (200) comprise a modem (211), typically of the GPRS sort.

As mentioned previously, the electric vehicle charging system (1) that is the object of the present invention comprises at least two sets of current transformers (typically three current transformers per set), current gauges (16), that are installed one at the beginning of the general electrical service line (17) distributing power to the building, and one on the electrical service line (13) that connects the meter hub (12) to the prefabricated electrical conduits (14).

The electric current gauges (16) are typically open- or closed-core current transformers, connected electrically to the system control switchboard (11), so that said switchboard (11) can receive the readings of said electric current gauges (16).

The system control switchboard (11) is a digital electronic unit that is electrically connected, both for its own power supply and to transmit signals, to the electrical service line (13) that connects the meter hub (12) to the prefabricated electrical conduits (14).

The system control switchboard (11) uses conventional telecommunications technology to communicate with the meter hub (12) and with the charging units (200).

In a preferred embodiment, the communication between the switchboard (11) controlling the charging system (1) and the control and communications units (205) of each charging unit (200) is of the PLC type, and uses the electrical wiring of the prefabricated electrical conduit (14) and the electrical service line (13) of the charging system (1) as a communications channel. In another embodiment, said communications are carried out by transmitting signals over a specific communications circuit.

The master switch (204), the power circuit (209), and the electrical outlet (203) of the charging units (200) may be either three-phase, 3ϕ + N, or single-phase, 1ϕ + N, so that the user of the charging system (1) can acquire either a three-phase or a single-phase charging unit (200) to match the type of electrical connection of his or her vehicle.

The master switch (204) of the charging unit (200) comprises, all together, a residual current breaker, connected mechanically to one side of an automatic power control switch with magnetic and thermal protection. The residual current breaker consists of a highly sensitive, super immunized residual current device. The master switch (204), all together, is motorized, M, to carry out the actions ordered by the system control switchboard (11), and can be reset, so that service outages caused by untimely tripping can be prevented.

The electric energy meter (210) of each charging unit (200) is of the digital electronic type, and can be sealed by the electricity company. Communication with the meter hub (12) is preferably carried out by means of PLC technology, using as a communications channel the power circuit (209) of the charging unit (200), the prefabricated electrical conduits (14) and the electrical service line (13) that connects the meter hub (12) to the prefabricated electrical conduits (14).

In one possible embodiment of the present invention, the energy meter (210) of the charging units (200) communicates with the electricity company by means of a modem (211), typically of the GPRS sort. In this way, it sends the individual consumption data of each user of the charging system (1) directly to the electricity company.

The control and communications unit (205) of the charging unit (200) preferably communicates with the switchboard (11) controlling the charging system (1) by means of PLC technology, using as its communications channel the power circuit (209) of the charging unit (200), the prefabricated electrical conduits (14) and the electrical service line (13) that connects the meter hub (12) to the prefabricated electrical conduits (14).

The control and communications unit (205) of the charging unit (200) sends data to the switchboard (11) controlling the charging system (1) regarding the moment that the electric vehicle connects to the charging system (1), and regarding the connection status of the master switch (204) of the charging unit (200), and receives orders to connect and disconnect said master switch (204) from the switchboard (11) controlling the charging system (1).

The system (1) charges the vehicle batteries and manages said charging according to efficiency criteria based on: the power available over the local electrical wiring of the building, typically a residential or office building; the electricity tariff offered by the electricity company during each time period; and the priority of each user to charge his or her vehicle, which is determined through a waiting list formulated based on the order in which each vehicle is connected to the charging system (1).

To set up the charging system (1), it is only needed to install the aforementioned meter hub (12) in the meter room (10) of the building, thus establishing an additional electrical circuit within the building, intended for the present electric vehicle charging system (1). A three-phase electrical service line (13) that is electrically connected to the system control switchboard (11) starts at this meter hub (12). This electrical service line (13) runs over to the parking area (100) of the building, and, to this electrical service line (13) the prefabricated electrical conduits (14) are connected, which distribute the electrical power of the charging system (1) to all of the parking spaces within a parking area (100).

Once the prefabricated electrical conduits (14) have been installed, the users of the parking area (100) who wish to use the present charging system (1) acquire either a three-phase or a single-phase charging unit (200), depending on the type of electrical connection of their vehicle, and connect each charging unit (200) to the prefabricated electrical conduit (14), via one of the openings (15) present in the prefabricated electrical conduit (14).

In this way, thanks to the easy setup of the present charging system (1), it is not necessary to build in any additional specific electrical infrastructure external to the building where the present charging system (1) is to be set up. This feature constitutes a significant advantage over other charging systems, which comprise a specific electrical infrastructure that carries electricity to each charging point, which entails costs stemming from the construction work, and moreover means that one cannot simultaneously charge more vehicles than those set by the number of charging points predetermined by the specific electrical infrastructure installed for that charging system in that building.

Typically, the prefabricated electrical conduit (14) is installed along the wall of the parking area (100), at a minimum height of 2.20 m, passing by all of the parking spaces, in such a way that at each parking space there is one of said openings (15), the protective cover of which is removed in order to insert the connectors (19) that connect the charging unit (200), typically situated at a height no lower than 1.60 m, to the phase, neutral and ground conductors of the prefabricated electrical conduit (14).

In one possible embodiment of the present invention, the electrical outlet (203) of the charging unit (200) comprises a locking device (206) that mechanically locks the electrical outlet (203) so that the plug of the charging cable of a vehicle can be neither plugged in or unplugged when said locking device (206) is in the locked position.

In an optional embodiment, locking said locking device (206) also turns on a switch that electrically connects the electrical outlet (203) to the power circuit (209) of the charging unit (200).

In another possible embodiment of the present invention, the aforementioned locking device (206) comprises a conventional cover that prevents the plug of the charging cable of a vehicle from being connected when said cover is blocking the electrical outlet (203).

In addition, according to one embodiment of the present invention, the electrical outlet (203) of the charging units (200) comprises a detection device (213) that detects when the plug of the charging cable of an electrical vehicle is connected to the electrical outlet (203), and sends a signal, via the control and communications unit (205) of the charging unit (200), to the system control switchboard (11), informing it of the three-phase or single-phase connection of a vehicle to the charging system (1).

In one embodiment of the present invention, the charging unit (200) comprises an external push button (207) that, when pressed by the user of the charging system (1), indicates that they wish to charge the vehicle urgently. In another embodiment of the present invention, said external push button (207) is an integral part of the keypad (202).

The charging units (200) of the present electric vehicle charging system (1) comprise an interface (201) for communicating with the user, which, according to different embodiments of the present invention, may comprise: a) a keypad (202); b) a touch screen, and c) a combination of a screen (208) and a keypad (202). Thanks to the aforementioned interface (201), the user can enter a password to identify him or herself as the owner or renter of the charging unit (200), thus preventing other users from being able to use the charging unit (200) without his or her consent.

In a normal operating mode, the present charging system (1) operates in the following way: when users park their electric vehicle in their parking space at the parking area (100), they connect the charging cable of their vehicle to the electrical outlet (203) of the charging unit (200) that they have installed at their parking space, in the opening (15) of the prefabricated electrical conduit (14) that passes by their parking space. Afterwards, after having entered a password and, if necessary, having indicated by pressing the external push button (207) that they wish to charge the vehicle urgently, charging of the vehicle commences.

The electric vehicle charging system (1) manages vehicle charging, such that the system control switchboard (11) gives the order to turn on the master switch (204) in the charging unit (200) when it determines that there is enough power available in the phase (single-phase connection) or phases (three-phase connection) to which the vehicle is connected. Determining whether or not there is power available in the charging system (1) is carried out by the switchboard (11), by reading the electric current circulating through the general electrical service line (17) distributing power to the building, by means of the current gauges (16) provided at the beginning of said general electrical service line (17) and on the electrical service line (13) that connects the meter hub (12) to the prefabricated electrical conduits (14).

In addition to the available power criterion, the charging system (1) also evaluates the order in which the vehicle is connected to the charging system (1), so that, when there is power available in the charging system (1), the vehicles that were connected to their respective charging unit (200) first have priority.

Should the electricity supply be cut off, the system control switchboard (11) saves in memory the order in which the electric vehicles have been connected to the charging system (1), such that, once the supply returns, the system (1) begins charging the electric vehicles again, giving priority to the ones that were connected to the charging system (1) first.

In addition to the aforementioned criteria concerning available power and the order in which the vehicle connects to the electric vehicle charging system (1), the charging system (1) also takes into consideration the electricity tariff offered at each time period by the electricity company, so that if, at the time the electric vehicle is connected to the charging unit (200) the charging system (1) verifies that the user has not indicated that the vehicle needs to be charged urgently, and that there is a lower electricity tariff during a set time period starting as soon as the vehicle is connected, the system control switchboard (11) does not give the order to begin charging the vehicle until reaching the moment when said lower tariff comes into effect.

This feature is especially useful in residential buildings that have installed the charging system (1) and where residents begin charging their vehicles upon returning home from work, usually in the evening. If the owner of the vehicle does not intend to disconnect the vehicle until the following day, it is likely that he or she is in no hurry for the vehicle to start charging immediately, and may in fact find it more advantageous for the charging system (1) to manage the charging of the vehicle in the way described above, so that the price he or she is billed by the electricity company is the lowest one possible within a set time period.

However, as has already been mentioned, the users can indicate that they wish to charge the vehicle urgently, by pressing the external push button (207), or by entering a specific code through the communications interface (201) of the charging unit (200). When the user presses the external push button (207) after connecting the charging cable of the vehicle, the electric vehicle charging system (1) forgoes the last of the above criteria, and does not wait for economically optimal conditions for charging to arise. Rather, once the criteria concerning both available power, and user priority based on the order in which the vehicles have been connected to the charging system (1), the system control switchboard (11) gives the order to begin charging the vehicle.

The control and communications unit (205) of the charging unit (200) sends data to the system control switchboard (11) regarding the moment that the electric vehicle is connected and the connection status of the master switch (204), and the energy meter (210) of the charging unit (200) sends data to the meter hub (12) concerning the accumulated energy and instant power consumed during charging. Likewise, the control and communications unit (205) receives orders from the system control switchboard (11) about resetting the master switch (204) when said master switch (204) is tripped in an untimely fashion, or when charging of the electric vehicle must commence.

The energy consumed by each user of the charging system (1) is added up by the meter hub (12), individually for each user, and all together for the whole charging system (1). Said consumption is included in the bill issued by the electricity company to each user, in such a way that the user receives, as an additional item in the electricity bill, the amount consumed with the electric vehicle charging system (1).

The system control switchboard (11) is typically located in the meter room (10) of the building. Some of the functions carried out by said switchboard (11) are: **a)** calculating the power available in the charging system (1), in each prefabricated electrical conduit (14) of the charging system (1) and in each specific phase of the three-phase electrical grid of the charging system (1), by measuring the total intensity of the general service line (17) distributing power to the building, and the intensity in each conduit (14) and phase, to which end there are current gauges (16) located both on the general service line (17) distributing power to the building, as well as at the beginning of each prefabricated electrical conduit (14) and, optionally, in each charging unit (200), in such a way that the switchboard (11), by means of the communication via PLC technology with the control and communications units (205) of each charging unit (200), can order the master switch (204) of each charging unit (200) to be connected/disconnected, depending on power availability in the charging system (1) and the demand available in each phase of the three-phase electrical grid of the charging system (1); **b)** controlling connection and priority charging of the electric vehicles, following the order in which each vehicle connects to the charging system (1), even when this charging takes place over more than one cycle or stage, such that, should the electricity supply to the building accidentally be interrupted, the order in which the vehicles are connected to the charging system (1) is saved in its memory, to continue charging said vehicles in the same order of priority once the supply returns; and c) establishing the charging schedule, with a mind to adjusting to the time period with the lowest tariff. The system control switchboard (11) controls the amounts of power consumed by each charging unit (200), to which end it performs a reading of said amounts of power based on the data that is sent to it by the electricity meter hub (12).

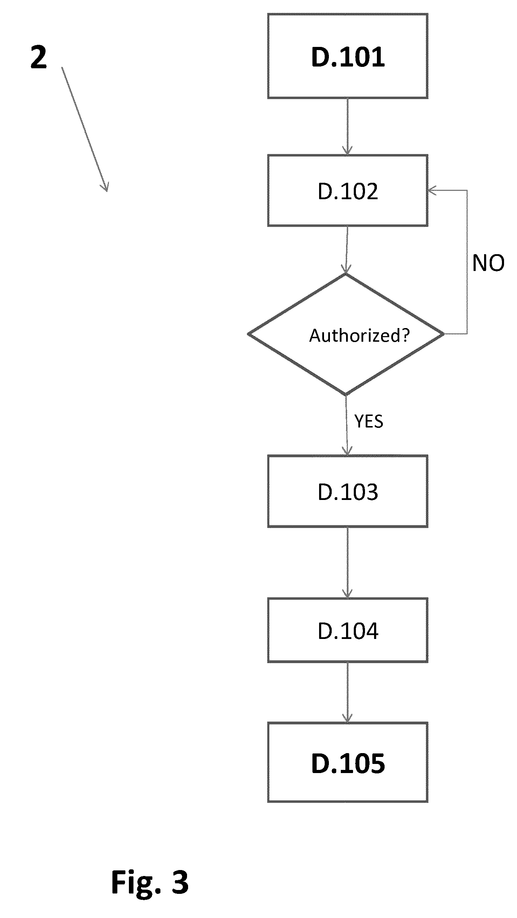

Figure 3 shows a general flow chart of a preferred embodiment of the charging method (2). According to this flow chart, users connect (D. 101) the plug of the charging cable of their electrical vehicle to the electrical outlet (203) of their charging unit (200), and identify themselves (D. 102), by entering a code through a communications interface (201) of the charging unit (200), as an authorized user of said charging unit (200); next, users decide whether or not to indicate (D. 103) that their vehicle needs to be charged urgently, by pressing an external push button (207) or entering a specific code through the communications interface (201) of the charging unit (200). Next, the electric vehicle charging system (1) verifies (D. 104) whether or not conditions are ideal to begin charging the vehicle, said conditions being based on the efficiency criteria mentioned at the outset of this detailed description. Next, once said ideal conditions are met, the electric vehicle is charged (D. 105).

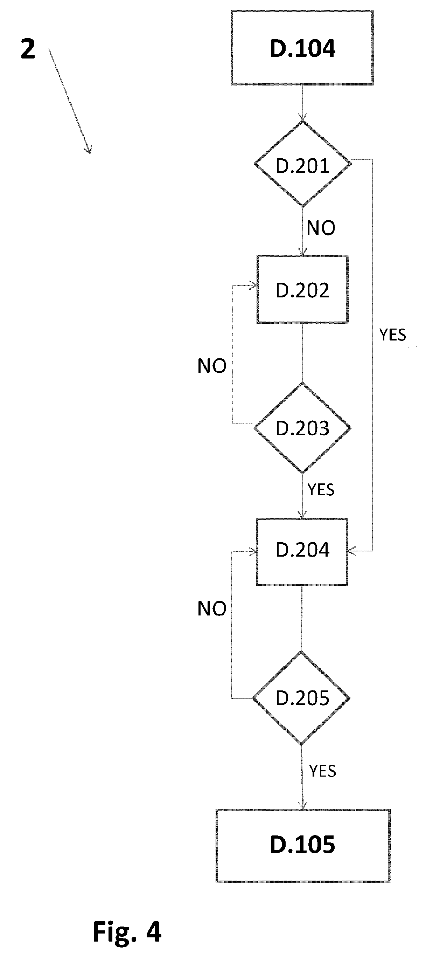

Figure 4 shows a flow chart with the breakdown into stages of the step (D. 104) in the method (2) in which it is verified if conditions are ideal for charging the electric vehicle. According to this flow chart, in the first stage (D. 201) it is verified whether or not the user has indicated that the vehicle needs to be charged urgently, by pressing an external push button (207) or entering a specific code through the communications interface (201) of the charging unit (200); depending on the result of this verification process, the method (2) comprises different sets of subsequent stages.

If the user has not indicated that his or her vehicle needs to be charged urgently, the method (2) continues through a loop comprising two stages (D. 202, D. 203), which consist of verifying (D. 203) whether the electricity tariff offered by the electricity company at the time the vehicle is connected is the lowest one within a set time period starting as soon as the vehicle is connected to the charging system (1), and waiting its turn (D. 202) until it has been verified (D. 203) that the electricity tariff is indeed the lowest one during said time period. Once it has been verified (D. 203) that the electricity tariff is indeed the lowest one within said time period, the method (2) continues through another loop comprising another two stages (D. 204, D. 205), which consist of verifying (D. 205) whether, depending on the priority of the user based on the order in which his or her vehicle was connected to the charging system (1), there is power available in the charging system (1) to charge the vehicle, and wait its turn (D. 204) until it has been verified (D. 205) that the user does indeed have priority and there is indeed power available. After verifying (D. 205) that the user does indeed have priority and that there is indeed power available, charging of the vehicle commences (D. 105).

If the user has indicated that the vehicle needs to be charged urgently, the first of the two loops in the method (2) mentioned in the preceding paragraph is skipped, moving straight into the loop comprising the two stages (D. 204, D. 205), which consist of verifying (D. 205) and waiting its turn (D. 204) until it has priority and there is power available. After verifying (D. 205) that the user does indeed have priority and that there is indeed power available, charging of the vehicle commences (D. 105).

Once the battery of the electric vehicle has been charged, a specific level of voltage is reached at the terminals of said battery, and the flow of electric current to the vehicle stops, as in conventional electric vehicle charging systems.

In each of the stages in the charging method (2), the control and communications unit (205) of the charging unit (200) is in permanent communication with the system control switchboard (11) to exchange data and orders.

Optionally, when the charging cycle has finished, the switchboard (11) may prepare a report with the consumed power and energy data.

The present invention should not be taken to be limited to the embodiment herein described. Other embodiments with minor modifications to the electric vehicle charging method (2) proposed in this detailed description, or with any sort of slight modification to the elements making up the system (1) herein proposed, can be carried out by those skilled in the art based on the present description. As such, the field of the invention is defined in the following claims.

## Claims

1. Electric vehicle charging system (1) **characterized in that** it comprises
- at least one electric vehicle charging unit (200);
- an electric energy meter hub (12), installed in the electricity meter room (10) of a building;
- at least one prefabricated electrical conduit (14), which conducts the electric current from the meter hub (12), to which it is connected by means of an electrical service line (13), over to the charging units (200);
- a system control switchboard (11) which manages the electric vehicle charging system (1), which is installed by connecting it to the electrical service line (13) that electrically connects the meter hub (12) to each prefabricated electrical conduit (14);
- electric current gauges (16) located at different points along the electrical wiring of the charging system (1);
wherein each charging unit (200) comprises
- an electrical connector (19) and a multicore cable, to connect to the electrical conductors of the prefabricated electrical conduit (14), through several openings (15) present in said prefabricated electrical conduits (14).

2. Electric vehicle charging system (1) according to claim 1, **characterized in that** the prefabricated electrical conduit (14) comprises:
- three phase conductors, one neutral conductor, and one ground conductor, for electrical connections chosen between three-phase and single-phase;
- the regularly-spaced openings (15) for electrically connecting to different types of electrical devices.

3. Electric vehicle charging system (1) according to claim 1, **characterized in that** it comprises two electric current gauges (16) that are located one at the beginning of the general electrical service line (17) distributing power to the building, and one on the electrical service line (13) that connects the meter hub (12) to the prefabricated electrical conduits (14), and are electrically connected to the system control switchboard (11) in such a way that they send to the system control switchboard (11) the data with the measurements taken, wherein the system control switchboard (11) is configured to calculate:
- the power available in the building for the charging system (1), by calculating the difference between the power supply and the power consumed by the households or offices in the building;
- the differential between the instant power consumed by the charging system (1), and the maximum power available for the charging system (1), in order to avoid ever exceeding the maximum available power.

4. Electric vehicle charging system (1) according to claim 1, **characterized in that** each electric current gauge (16) comprises a set of open- or closed-core current transformers, for measuring the intensity of the current in one or multiple electrical phases of a section of electrical wiring.

5. Electric vehicle charging system (1) according to any of the preceding claims, **characterized in that** the charging unit (200) comprises:
- a power circuit (209);
- a control and communications unit (205) to communicate with the system control switchboard (11);
- an electric energy meter (210);
- a master switch (204), which comprises:
○ a power control switch;
○ a residual current device;
- a communications interface (201) built with a choice of:
○ a keypad (202);
○ a touch screen;
○ a combination of screen (208) and keypad (202);
- an electrical outlet (203).

6. Electric vehicle charging system (1) according to claim 5, **characterized in that** the communication between the system control switchboard (11), the meter hub (12), the energy meter (210) of the charging unit (200) and the control and communications unit (205) of the charging unit (200) is carried out by means of a telecommunications technology chosen between:
○ PLC technology that uses as a communications channel the power circuit (209) of the charging unit (200), the electricity conductors of the prefabricated electrical conduit (14) and of the electrical service line (13) that connects the meter hub (12) to each prefabricated electrical conduit (14);
○ signals transmitted over a specific communications circuit within the present electric vehicle charging system (1);
○ wireless technology;
○ a combination of the above.

7. Electric vehicle charging system (1) according to the claims 5 and 6, **characterized in that** the master switch (204) is motorized, and is controlled by the system control switchboard (11), said master switch (204) being reset when the system control switchboard (11) gives the control and communications unit (205) of the charging unit (200) the order to reset.

8. Electric vehicle charging system (1) according to claim 5, **characterized in that** the energy meter (210) of the charging unit (200) includes a modem (211) for direct communication with the electricity company.

9. Electric vehicle charging system (1) according to claim 5, **characterized in that** the electric energy meter (210) of each charging unit (200) measures the energy and instant power consumed by each charging unit (200), subsequently sending this data to the electricity meter hub (12) of the charging system (1).

10. Electric vehicle charging system (1) according to claim 9, **characterized in that** the electricity meter hub (12) is configured to record the energy and instant power consumed in each charging unit (200) and in the entire electric vehicle charging system (1).

11. Electric vehicle charging system (1) according to claim 10, **characterized in that** the electricity meter hub (12) communicates all the data measured by said meter hub (12) to the electricity company, along with the data sent to it by the energy meters (210) of each charging unit (200).

12. Electric vehicle charging system (1) according to claim 5, **characterized in that** the control and communications unit (205) of each charging unit (200) is configured to:
- send the system control switchboard (11) data concerning:
○ the moment an electric vehicle is connected to the electric vehicle charging system (1);
○ the connection status of the master switch (204);
and
- receive the orders to connect and disconnect the master switch (204) sent by the system control switchboard (11).

13. Electric vehicle charging system (1) according to claim 5, **characterized in that** the charging unit (200) comprises a locking device (206), which when activated has an effect chosen between:
a. mechanically locking or unlocking the electrical outlet (203), thus respectively preventing or allowing the plug of the charging cable of an electric vehicle to be connected/disconnected;
b. electrically connecting/disconnecting said electrical outlet (203) to/from the power circuit (209) of the charging unit (200).
c. a combination of the above two effects.

14. Electric vehicle charging system (1) according to claim 5, **characterized in that** the electrical outlet (203) of the charging unit (200) comprises a detection device (213) that detects when the plug of the charging cable of an electrical vehicle is connected to the electrical outlet (203), and sends a signal, via the control and communications unit (205) of the charging unit (200), to the system control switchboard (11), informing it of the three-phase or single-phase connection of a vehicle to the charging system (1).

15. Electric vehicle charging system (1) according to claim 5, **characterized in that** the charging unit (200) comprises an indicator (212) for signaling the presence/absence of voltage in the electrical outlet (203).

16. Electric vehicle charging system (1) according to claim 1, **characterized in that** the charging unit (200) comprises an external push button (207), that, when pressed by the user of the charging system (1), indicates that the vehicle needs to be charged urgently.

17. Method (2) for charging electric vehicles using the electric vehicle charging system (1), **characterized in that** it comprises the following steps for charging electric vehicles:
i. connecting (D. 101) the plug of the charging cable of the electric vehicle to the corresponding electrical outlet (203) on the charging unit (200);
ii. identifying (D. 102) if the user of the charging system is authorized to use the charging unit (200), to which end a code is entered through a communications interface (201) of the charging unit (200);
iii. indicating (D. 103) whether or not the electric vehicle needs to be charged urgently, by pressing an external push button (207), or by entering a specific code through the communications interface (201);
iv. verifying (D. 104) whether conditions are ideal for charging the electric vehicle, where ideal conditions are understood to be those that meet previously determined efficiency criteria;
v. charging (D. 105) the electric vehicle.

18. Method (2) for charging electric vehicles according to claim 17, **characterized in that** the efficiency criteria used to determine whether conditions are ideal for charging the electric vehicle comprise:
a. determining that there is power available in the charging system (1), due to the presence of surplus power in the building where the charging system (1) is installed;
b. determining that the user of the charging system (1) has priority to charge his or her vehicle, according to a waiting list that is formulated based on the order in which each electric vehicle is connected to the charging system (1);
c. establishing a schedule for charging the electric vehicles, according to which the ideal moment for beginning to charge the vehicle is determined as the moment when the lowest electricity tariff offered by the electricity company is available, during a set time period starting as soon as the electric vehicle is connected to the electric vehicle charging system (1).

19. Method (2) for charging electric vehicles according to claim 18, **characterized in that** the step (D. 104) in which it is verified whether conditions are ideal for charging, according to the aforementioned efficiency criteria, is carried out following a process that comprises at least the following stages:
i. verifying (D. 201) whether it has been indicated that the electric vehicle needs to be charged urgently, by pressing an external push button (207), or by entering a specific code through the communications interface (201);
■ verifying (D. 203), if the user has not indicated that his or her vehicle needs to be charged urgently, if the lowest electricity tariff offered by the electricity company is available, during a set time period starting as soon as the electric vehicle is connected to the electric vehicle charging system (1), and continuing with the method (2) when the lowest electricity tariff within the aforementioned time period is available;
ii. verifying (D. 205), according to the priority in the waiting list, which is based on the order in which the electric vehicle is connected to the electric vehicle charging system (1), whether there is power available in the system and in the connecting electric phase, to charge the electric vehicle, and continuing with the method (2) when there is power available, according to the aforementioned priority.
